(19) Europäisches Patentamt
European Patent Office
Office européen des brevets

(11) **EP 2 908 307 A1**

(12) **EUROPEAN PATENT APPLICATION**
published in accordance with Art. 153(4) EPC

(43) Date of publication:
**19.08.2015 Bulletin 2015/34**

(51) Int Cl.:
*G09F 19/00* (2006.01)    *G07D 13/00* (2006.01)

(21) Application number: **13844656.2**

(22) Date of filing: **02.04.2013**

(86) International application number:
**PCT/CN2013/073649**

(87) International publication number:
**WO 2014/056312 (17.04.2014 Gazette 2014/16)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **09.10.2012 CN 201210380387**

(71) Applicant: **GRG Banking Equipment Co., Ltd.
Guangdong 510663 (CN)**

(72) Inventors:
• **WANG, Qinghua
Guangzhou
Guangdong 510663 (CN)**
• **KE, Wenhui
Guangzhou
Guangdong 510663 (CN)**

• **CUI, Shiyou
Guangzhou
Guangdong 510663 (CN)**
• **WAN, Jiang
Guangzhou
Guangdong 510663 (CN)**
• **WU, Minyan
Guangzhou
Guangdong 510663 (CN)**
• **WANG, Hui
Guangzhou
Guangdong 510663 (CN)**

(74) Representative: **Maiwald Patentanwalts GmbH
Elisenhof
Elisenstrasse 3
80335 München (DE)**

(54) **CASH REPLENISHMENT METHOD FOR FINANCIAL SELF-SERVICE EQUIPMENT**

(57)    A cash replenishment method for financial self-service equipment, comprising: acquiring the cash replenishment amount input by a user (S11); acquiring the denominations of available banknotes in the self-service equipment (S12); acquiring the remaining number of notes corresponding to each denomination (S13); in accordance with the denomination and the remaining number of notes, determining the total amount in the self-service equipment (S14); when the total amount is not less than the cash replenishment amount and the only denomination remaining in the self-service equipment or the greatest common divisor of several denominations remaining in the self-service equipment can exactly divide the cash replenishment amount, performing cash replenishment of the cash replenishment amount using a precise cash replenishment method (S15); when the total amount is not less than the cash replenishment amount and the only denomination remaining in the self-service equipment or the greatest common divisor of several denominations remaining in the self-service equipment cannot exactly divide the cash replenishment amount, determining a new cash replenishment amount capable of exactly dividing the only denomination remaining in the self-service equipment or the greatest common divisor of several denominations remaining in the self-service equipment within the range from the cash replenishment amount with a preset error value subtracted to the cash replenishment amount (S16); when the new cash replenishment amount exists, if the new cash replenishment amount is used as the cash replenishment amount, performing cash replenishment of the cash replenishment amount using the precise cash replenishment method (S 17); and when the new cash replenishment amount does not exist within the range from the cash replenishment amount with a preset error value subtracted to the cash replenishment amount, prompting that cash replenishment has failed (S18). The above-mentioned cash replenishment method for financial self-service equipment can achieve non-precision cash replenishment, thereby improving the success rate of cash replenishment. The method can also inform a user of the locations of other self-service equipment meeting the cash replenishment condition nearby, so as to meet the actual demand of the user. On an automatic foreign ex-

change machine, the self-service equipment can automatically perform foreign exchange with exchange rate fluctuations. The method has a low error rate, is easily accepted by the user, and is flexible and convenient to use.

| | |
|---|---|
| acquiring a total dispensing amount input by a user | S11 |
| acquiring denomination values of available banknotes in the self-service equipment | S12 |
| acquiring the number of available banknotes corresponding to each denomination value | S13 |
| determining a total available amount in the self-service equipment according to the denomination values and the number of available banknotes | S14 |
| dispensing banknotes for the total dispensing amount adopting a precise banknote dispensing method when a first condition is satisfied | S15 |
| determining a new dispensing amount when a second condition is satisfied | S16 |
| if there is a new dispensing amount, setting the new dispensing amount as the total dispensing amount, and dispensing banknotes for the total dispensing amount adopting the precise banknote dispensing method | S17 |
| if there is no new dispensing amount in the range from the total dispensing amount minus the preset error to the total dispensing amount, prompting that the banknote dispensing fails | S18 |

Figure 1

## Description

## CROSS-REFERENCE TO RELATED APPLICATION

This application claims the benefit of Chinese patent application No. 201210380387.9, titled "METHOD FOR FINANCIAL SELF-SERVICE EQUIPMENT TO DISPENSE BANKNOTES" and filed with the State Intellectual Property Office on October 9, 2012, which is hereby incorporated by reference in its entirety.

## FIELD OF THE INVENTION

The invention relates to the technical field of financial self-service terminal transaction, and particularly to a method for a financial self-service equipment to dispense banknotes with incomplete precise.

## BACKGROUND OF THE INVENTION

Presently, a method for a financial self-service equipment to dispense banknotes is usually a precise one, i.e., in the method, the banknotes are dispensed strictly in accordance with a total amount of banknotes to be dispensed, so that the total amount obtained by adding denominations of all dispensed banknotes together is exactly equal to the total amount of banknotes to be dispensed.

The disadvantage of this precise method is that it is unable to satisfy a user's needs even a deviation is acceptable to the user. When a user wants to exchange 100 dollars into RMB on an automatic foreign currency exchange machine and the exchange rate is 6.823, the automatic foreign currency exchange machine should output RMB 682 Yuan; if the banknotes with 1-yuan and 2-yuan denominations have been used up and the minimum denomination in the remaining banknotes is 5-yuan, then the exchange will fail if a precise banknotes output is required in accordance with the total amount of banknotes to be dispensed. In the case that the user would like to accept the banknotes dispensing with 680 Yuan, however the machine does not deal with this situation flexibly. Therefore the existing banknote dispensing method of the banknote dispensing equipment is not flexible enough to provide a better banknote dispensing solution for users, and it is not convenient for users to use.

Therefore, the most urgent problem to be solved is how to improve the flexibility of the banknotes dispensing solution and make it more convenient for users in use.

## SUMMARY OF THE INVENTION

In view of this, the objective of the invention is to provide a method for a financial self-service equipment to dispense banknotes to improve the flexibility of a banknote dispensing solution and make it more convenient for uses in use.

An embodiment of the invention is implemented as follows.

A method for a financial self-service equipment to dispense banknotes, which includes:

acquiring a total dispensing amount input by a user;

acquiring denomination values of available banknotes in the self-service equipment;

acquiring the number of available banknotes corresponding to each denomination value;

determining a total available amount in the self-service equipment according to the denomination values and the number of available banknotes;

dispensing banknotes for the total dispensing amount adopting a precise banknote dispensing method, in the case where the total available amount is not less than the total dispensing amount and the greatest common divisor of only one denomination value or some denomination values available in the self-service equipment can divide the total dispensing amount with no remainder;

determining a new dispensing amount which falls into a range from the total dispensing amount minus a preset error to the total dispensing amount, wherein the new dispensing amount can divide the greatest common divisor of only one denomination value or some denomination values available in the self-service equipment with no remainder, in the case where the total available amount is not less than the total dispensing amount and the greatest common divisor of only one denomination value or some denomination values available in the self-service equipment can not divide the total dispensing amount with no remainder;

if there is a new dispensing amount, setting the new dispensing amount as the total dispensing amount, and dispensing banknotes for the total dispensing amount adopting the precise banknote dispensing method ; and

if there is no new dispensing amount in the range from the total dispensing amount minus the preset error to the total dispensing amount, prompting that the banknote dispensing fails.

Preferably, in the case where there is only one denomination value available in the self-service equipment, the precise banknote dispensing method includes:

calculating a quotient from dividing the total dispensing amount by the only one denomination value; and

outputting banknotes with the only one denomination value by the self-service equipment, the number of the outputting banknotes being equal to the quotient.

Preferably, in the case where there are two denomination values available in the self-service equipment, the precise banknote dispensing method includes:

establishing a relation between the two denomination values, the number of available banknotes corresponding to each of the two denomination values and the total dispensing amount, which is expressed as the following equation: $A_1X_1 + A_2X_2 = M$ , where $A_1$ and $A_2$ are the two denomination values respectively, $X_1$ is the number of dispensing banknotes with the denomination value $A_1$, $X_2$ is the number of dispensing banknotes with the denomination value $A_2$, and $M$ is the total dispensing amount;

dividing both sides of the equation $A_1X_1 + A_2X_2 = M$ by the greatest common divisor gcd($A_1$,$A_2$) to obtain a linear equation with two unknowns, $a_1X_1 + a_2X_2 = m$, in the case where the greatest common divisor gcd($A_1$, $A_2$) of the two denomination values is not greater than 1, where $a_1$ is a quotient from dividing $A_1$ by gcd($A_1$, $A_2$), $a_2$ is a quotient from dividing $A_2$ by gcd($A_1$, $A_2$), and $m$ is the quotient from dividing $M$ by gcd($A_1$, $A_2$) ;

calculating a general solution of $a_1X_1 + a_2X_2 = m$ to obtain a general solution formula $\begin{cases} X_1 = X_{01} + a_2t \\ X_2 = X_{02} - a_1t \end{cases}$,

where $\begin{cases} X_{01} \\ X_{02} \end{cases}$ is one particular solution of $a_1X_1 + a_2X_2 = m$, and $t$ is an integer free variable;

calculating out a set of $A$ all $t$ satisfying $0 \le X_1 \le S_1$, $0 \le X_2 \le S_2$ according to the general solution formula, where $S_1$ is the actual number of available banknotes with the denomination value $A_1$, and $S_2$ is the actual number of available banknotes with the denomination $A_1$ ;

further determining, in the set $A$, the range of $t$ according to a preset banknote dispensing principle corresponding to $X_1$ and $X_2$; and

substituting the integer $t$ into the general solution formula to calculate out values of $X_1$ and $X_2$, and outputting $X_1$ number of banknotes with the denomination value $A_1$ and $X_2$ number of banknotes with the denomination value $A_2$ by the self-service equipment, in the case where there is an integer $t$.

Preferably, in the case where there are n types of denomination values available in the self-service equipment, the precise banknote dispensing method includes:

establishing a relation between the n types of denomination values, the number of available banknotes corresponding to each of the n types of denomination values and the total dispensing, which is expressed as the following equation:

$$\sum_{i=1}^{n} A_iX_i = M$$ , where $A_i$ is one denomination value of the n types of denomination values, $X_i$ is the number of dispensing banknotes with the denomination value $A_i$, $n$ is the total number of the denomination value types, and $M$ is the total dispensing amount;

dividing both sides of the equation $\sum_{i=1}^{n} A_iX_i = M$ by the greatest common divisor gcd($A_1$,$A_2$...$A_n$) to obtain a linear indeterminate equation with integer coefficients and n unknowns, $\sum_{i=1}^{n} a_iX_i = m$, in the case where the greatest common divisor gcd($A_1$, $A_2$...$A_n$) of the n types of denomination values is not greater than 1, where $a_i$ is a quotient from dividing $A_i$ by gcd($A_1$, $A_2$...$A_n$), and $m$ is a quotient from dividing $M$ by gcd($A_1$, $A_2$...$A_n$) ;

calculating a general solution formula of the linear indeterminate equation with integer coefficients and n unknowns $\sum_{i=1}^{n} a_iX_i = m$ (where gcd($a_1$,$a_2$...,$a_n$)=1), which is

$$\begin{cases} X_1 = X_{01}[M - (a_3X_3 + \cdots + a_nX_n)] + a_2t \\ X_2 = X_{02}[M - (a_3X_3 + \cdots + a_nX_n)] - a_1t \end{cases},$$

where $t, x_3, x_4, \cdots, x_n \in Z$;

calculating out a set A of all $t$ satisfying $0 \le X_1 \le S_1$, $0 \le X_2 \le S_2 ... 0 \le X_n \le S_n$ according to the general solution of $\sum_{i=1}^{n} a_iX_i = m$ , where $S_1, S_2 \cdots S_n$ are the numbers of available banknotes respectively with the denominations values $A_1, A_2 ... A_n$;

determining, in the set A, the range of $t$ according to a preset banknote dispensing principle corresponding to $X_1, X_2 \cdots X_n$; and

substituting the integer $t$ into the general solution formula to calculate out values of $X_1, X_2 \cdots X_n$, and outputting $X_1, X_2 \cdots X_n$ numbers of banknotes with corresponding denomination values $A_1, A_2 ... A_n$, in the case where there is an integer $t$ .

Preferably, the preset banknote dispensing principle is an average-dispensing principle.

Preferably, the preset banknote dispensing principle is an equal-emptying principle.

Preferably, the preset banknote dispensing principle is a number minimum principle.

Preferably, the preset banknote dispensing principle is a maximum-denomination priority principle.

Preferably, the preset banknote dispensing principle is a minimum-denomination priority principle.

Preferably, in the case where there is no new dispensing amount, after the step of prompting that the banknote dispensing fails, the method further includes:

acquiring, in a database, by the self-service equipment, available denomination values and the number of banknotes corresponding to each available denomination value of other self-service equipments connected to a network;

determining, in the database, a specific address of a self-service equipment that conforms to a preset condition, the preset condition being that: the total available amount in the self-service equipment is not less than the total dispensing amount and the greatest common divisor of only one denomination value or some denomination values available in the self-service equipment can divide the total dispensing amount with no remainder; or that there is a new dispensing amount which falls into a range from the total dispensing amount minus a preset error to the total dispensing amount and can divide the greatest common divisor of only one denomination value or some denomination values available in the self-service equipment with no remainder; and

displaying the specific address.

Compared with the prior art, the technical solution provided by the embodiment has following advantages and features.

In the solution provided by the invention, an incomplete precise banknote dispensing solution is achieved, and the solution satisfies the actual needs of the self-service equipment, especially on an automatic foreign currency exchange machine, the self-service equipment may perform foreign currency exchange automatically as the exchange rate fluctuates. By the invention, an optimal banknote dispensing solution within a permissible error range of a system can be calculated out. It not only achieves incomplete precise banknote dispensing within a certain error to improve the success rate of banknote dispensing so as to provide convenience to the users, but also makes the error minimum to achieve an optimized performance, so that the users are willing to accept the incomplete banknote dispensing solution for reference easily. The solution according to the invention has practical values and is more flexible and convenient for users in use.

## BRIEF DESCRIPTION OF THE DRAWINGS

To more clearly illustrate technical solutions in the invention or the prior art, accompanying drawings used in the description of the embodiments and the prior art will be simply introduced below. Obviously, the accompanying drawings described below are just some embodiments of the invention, and other accompanying drawings can be obtained by those skilled in the art in light of these accompanying drawings without any creative efforts.

Figure 1 is a flow chart of a method a financial self-service equipment to dispense banknotes according to the invention;

Figure 2 is a flow chart of a banknote dispensing algorithm according to the invention in the case that there is only one domination;

Figure 3 is a flow chart of a banknote dispensing algorithm according to the invention in the case there are two dominations; and

Figure 4 is a flow chart of a banknote dispensing algorithm according to the invention in the case that there are three or more dominations.

## DETAILED DESCRIPTION OF THE INVENTION

The solutions according to the embodiments of the invention will be clearly and fully described below with reference to the drawings in the embodiments of the invention. Apparently, the embodiments described below are merely some but not all of embodiments of the invention. Any other embodiments that will occur to those ordinary skilled in the art in light of the embodiments of the invention here shall belong to the scope of protection of the invention.

A method for a financial self-service equipment to dispense banknotes is provided in an embodiment according to the present invention, so as to improve the banknote-dispensing flexibility for users to use more easily. As there are several manners for specifically implementing of the above method for a financial self-service equipment to dispense banknotes, the method will be described in detail with specific embodiments in the following.

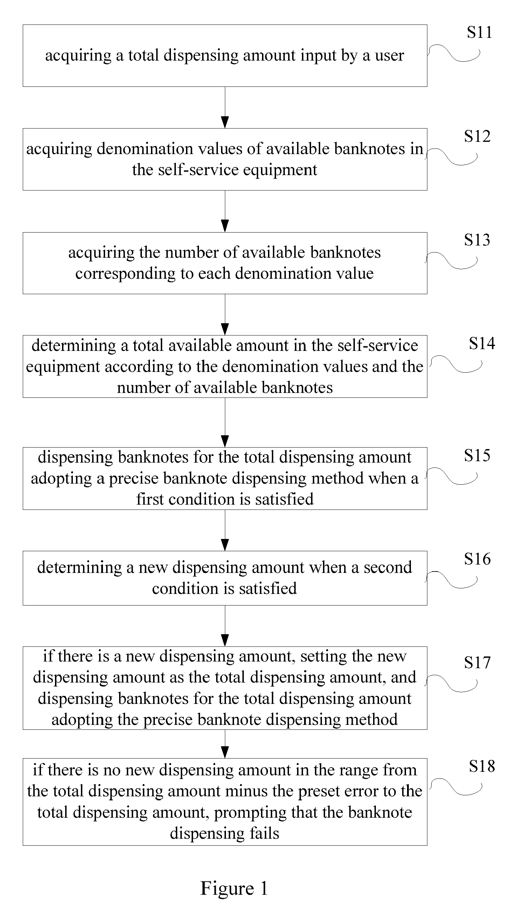

Referring to figure 1, which shows a method for a financial self-service equipment to dispense banknotes, the method includes the following steps.

Step S11, acquiring a total dispensing amount input by a user.

Specifically, the total dispensing amount is an amount to be output after the self-service equipment finishes a matching on the user, that is, a user-demanded amount. For example, the user inputs 200 Yuan.

Step S12, acquiring denomination values of available banknotes in the self-service equipment.

Specifically, the denomination value is a denomination of a banknote. For example, there are a 100 Yuan banknote, a 50 Yuan banknote and a 10 Yuan banknote in the self-service equipment.

Step S13, acquiring the number of available banknotes corresponding to each denomination value.

Specifically, the number of available banknotes is the actual available number of banknotes. For example, there are 10 pieces of 100 Yuan banknotes, 20 pieces of 50 Yuan banknotes and 20 pieces of 10 Yuan banknotes in the self-service equipment.

Step S14, determining a total available amount in the self-service equipment according to the denomination values and the number of available banknotes; Specifically, the total available amount is an amount of all banknotes. For example, the total available amount= 100 Yuan×10 + 50 Yuan×20 + 10 Yuan×2 =2220 Yuan. Step S15, dispensing banknotes for the total dispensing amount adopting a precise banknote dispensing method, in the case where the total available amount is not less than the total dispensing amount and the greatest common divisor of only one denomination value or some denomination values available in the self-service equipment can divide the total dispensing amount with no remainder;

Specifically, there are different judgment standards for the self-service equipments having different numbers of banknotes. When both the number of banknotes and denomination values in the self-service equipment conform to the total dispensing amount input by the user, then the banknote dispensing will be performed. The precise banknote dispensing method mentioned herein will be described in detail later.

Step S16, determining a new dispensing amount which falls into a range from the total dispensing amount minus a preset error to the total dispensing amount, wherein the new dispensing amount can divide the greatest common divisor of only one denomination value or some denomination values available in the self-service equipment with no remainder, in the case where the total available amount is not less than the total dispensing amount and the greatest common divisor of only one denomination value or some denomination values available in the self-service equipment can not divide the total dispensing amount with no remainder;

Specifically, if the number of banknotes and denomination values in the self-service equipment are undesirable to match the total dispensing amount input by the user, a preset error will be introduced to the self-service equipment, and the self-service equipment determines, after performing error calculation, whether the denomination values and the number of the available banknotes in the self-service equipment meet the requirements.

Step S17, if there is a new dispensing amount, setting the new dispensing amount as the total dispensing amount, and dispensing banknotes for the total dispensing amount adopting the precise banknote dispensing method;

Specifically, if the new dispensing amount exists, it means that, after performing the error calculation, the number of banknotes and denomination values in the self-service equipment can meet the user's requirements.

Step S18, if there is no new dispensing amount in the range from the total dispensing amount minus the preset error to the total dispensing amount, prompting that the banknote dispensing fails.

Specifically, if after the error calculation, it is still can not match an amount satisfying the requirement of the user according to the number of banknotes and denomination values in the self-service equipment, then a failure of banknote dispensing is prompted.

In the embodiment shown in figure 1, an incomplete precise banknote dispensing solution is achieved, and the solution satisfies the actual needs of the self-service equipment, especially on an automatic foreign currency exchange machine, the self-service equipment may perform foreign currency exchange automatically as the exchange rate fluctuates. By the invention, an optimal banknote dispensing solution within a permissible error range of a system can be calculated out. It not only achieves incomplete precise banknote dispensing within a certain error to improve the success rate of banknote dispensing so as to provide convenience to the users, but also makes the error minimum to achieve an optimized performance, so that the users are willing to accept the incomplete banknote dispensing solution for reference easily. The solution according to the invention has practical values and is more flexible and convenient for users in use.

In the embodiment shown in figure 1, in the case where there is no new dispensing amount, after the step S18 of prompting that the banknote dispensing fails, the method further includes:

acquiring, in a database, by the self-service equipment, available denomination values and the number of banknotes corresponding to each available denomination value of other self-service equipments connected to a network;

determining, in the database, a specific address of a self-service equipment that conforms to a preset condition, the preset condition being that: the total available amount in the self-service equipment is not less than the total dispensing amount and the greatest common divisor of only one denomination value or some denomination values available in the self-service equipment can divide the total dispensing amount with no remainder; or that there is a new dispensing amount which falls into a range from the total dispensing amount minus a preset error to the total dispensing amount and can divide the greatest common divisor of only one denomination value or some denomination values available in the self-service equipment with no remainder; and

displaying the specific address.

Specifically, the purpose of displaying other self-service equipments connected to the network on the self-service equipment is to enable the user to dispense banknotes on other self-service equipments.

In the embodiment shown in figure 1, in the case where there is only one denomination value available in the self-service equipment, the precise banknote dispensing method includes:

calculating a quotient from dividing the total dispensing amount by the only one denomination value; and

outputting banknotes with the only one denomination value by the self-service equipment, the number of the outputting banknotes being equal to the quotient.

In the embodiment shown in Figure 1, in the case where there are two denomination values available in the self-service equipment, the precise banknote dispensing method includes:

establishing a relation between the two denomination values, the number of available banknotes corresponding to each of the two denomination values and the total dispensing amount, which is expressed as the following equation: $A_1X_1 + A_2X_2 = M$ , where $A_1$ and $A_2$ are the two denomination values respectively, $X_1$ is the number of dispensing banknotes with the denomination value $A_1$, $X_2$ is the number of dispensing banknotes with the denomination value $A_2$, and $M$ is the total dispensing amount;

dividing both sides of the equation $A_1X_1 + A_2X_2 = M$ by the greatest common divisor $\gcd(A_1, A_2)$ to obtain a linear equation with two unknowns, $a_1X_1 + a_2X_2 = m$, in the case where the greatest common divisor $\gcd(A_1, A_2)$ of the two denomination values is not equal to 1, where $a_1$ is a quotient from dividing $A_1$ by $\gcd(A_1, A_2)$, $a_2$ is a quotient from dividing $A_2$ by $\gcd(A_1, A_2)$, and $m$ is the quotient from dividing $M$ by $\gcd(A_1, A_2)$;

calculating a general solution of $a_1X_1 + a_2X_2 = m$ to obtain a general solution formula $\begin{cases} X_1 = X_{01} + a_2t \\ X_2 = X_{02} - a_1t \end{cases}$, where $\begin{cases} X_{01} \\ X_{02} \end{cases}$ is one particular solution of $a_1X_1 + a_2X_2 = m$, and $t$ is an integer free variable;

calculating out a set of $A$ all $t$ satisfying $0 \leq X_1 \leq S_1$, $0 \leq X_2 \leq S_2$ according to the general solution formula, where $S_1$ is the actual number of available banknotes with the denomination value $A_1$, and $S_2$ is the actual number of available banknotes with the denomination $A_2$;

further determining, in the set $A$, the range of $t$ according to a preset banknote dispensing principle corresponding to $X_1$ and $X_2$; and

substituting the integer $t$ into the general solution formula to calculate out values of $X_1$ and $X_2$, and outputting $X_1$ number of banknotes with the denomination value $A_1$ and $X_2$ number of banknotes with the denomination value $A_2$ by the self-service equipment, in the case where there is an integer $t$.

In the embodiment shown in Figure 1, in the case where there are n types of denomination values available in the self-service equipment, the precise banknote dispensing method includes:

establishing a relation between the n types of denomination values, the number of available banknotes corresponding to each of the n types of denomination values and the total dispensing, which is expressed as the following equation:

$$\sum_{i=1}^{n} A_i X_i = M$$ , where $A_i$ is one denomination value of the n types of denomination values, $X_i$ is the number of dispensing banknotes with the denomination value $A_i$, $n$ is the total number of the denomination value types, and $M$ is the total dispensing amount;

dividing both sides of the equation $\sum_{i=1}^{n} A_i X_i = M$ by the greatest common divisor $\gcd(A_1, A_2...A_n)$ to obtain a linear indeterminate equation with integer coefficients and n unknowns, $\sum_{i=1}^{n} a_i X_i = m$, in the case where the greatest common divisor $\gcd(A_1, A_2...A_n)$ of the n types of denomination values is not equal to 1, where $a_i$ is a quotient from dividing $A_i$ by $\gcd(A_1, A_2...A_n)$ and $m$ is a quotient from dividing $M$ by $\gcd(A_1, A_2...A_n)$;

calculating a general solution formula of the linear indeterminate equation with integer coefficients and n unknowns $\sum_{i=1}^{n} a_i X_i = m$ (where $\gcd(a_1, a_2...,a_n)$ =1),                    which                    is

$$\begin{cases} X_1 = X_{01}[M - (a_3X_3 + \cdots + a_nX_n)] + a_2t \\ X_2 = X_{02}[M - (a_3X_3 + \cdots + a_nX_n)] - a_1t \end{cases},$$

where $t, x_3, x_4, \cdots, x_n \in Z$;

calculating out a set A of all $t$ satisfying $0 \leq X_1 \leq S_1, 0 \leq X_2 \leq S_2 \ldots 0 \leq X_n \leq S_n$ according to the general solution of $\sum_{i=1}^{n} a_iX_i = m$, where $S_1, S_2 \cdots S_n$ are the numbers of available banknotes respectively with the denominations values $A_1, A_2 \ldots A_n$;

determining, in the set A, the range of $t$ according to a preset banknote dispensing principle corresponding to $X_1, X_2 \cdots X_n$; and

substituting the integer $t$ into the general solution formula to calculate out values of $X_1, X_2 \cdots X_n$, and outputting $X_1, X_2 \cdots X_n$ numbers of banknotes with corresponding denomination values $A_1, A_2 \ldots A_n$, in the case where there is an integer $t$ .

The technical solutions of the invention are summarized above, and the description will be given in details by specific embodiments below.

First Embodiment

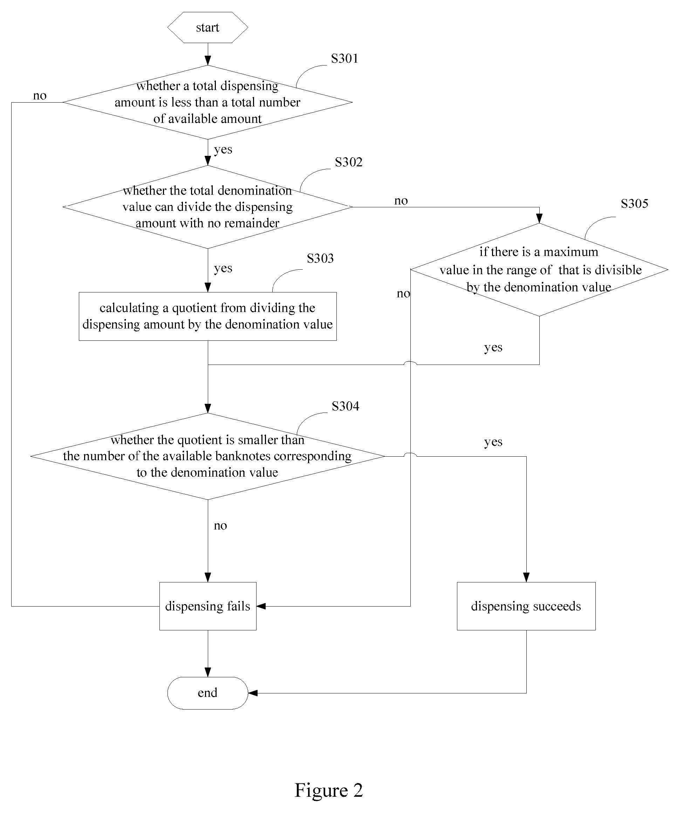

Referring to Figure 2, which shows a whole banknote dispensing process of a self-service equipment in the case where there is only one denomination value available in the self-service equipment:

Step S301: judging whether a total dispensing amount is not greater than a total number of available amount in banknote-boxes of the self-service equipment, if yes, proceeding to step S302; otherwise, the banknote-dispensing fails and the sub-process ends.

Step S302: judging whether the total denomination value can divide the dispensing amount with no remainder, if yes, proceeding to step S303; otherwise, proceeding to step S305.

Step S303: calculating a quotient from dividing the dispensing amount by the denomination value, then proceeding to step S304.

Step S304: determining whether the quotient is smaller than the number of the available banknotes corresponding to the denomination value, if yes, the banknote dispensing is successful, the quotient is the banknote dispensing result and the sub-process ends; otherwise the banknote dispensing fails and the sub-process ends.

Step S305: calculating out, in a range from the total dispensing amount $M$ minus a preset error $\sigma$ to the total dispensing amount $M$ , i.e., in a range of [$M$-$\sigma$,$M$], a maximum value that is divisible by the denomination value, if there is a maximum value in the range of [$M$-$\sigma$,$M$] that is divisible by the denomination value, calculating out a quotient from dividing this maximum value by the denomination value and then the process proceeds to step S304; if there is no value in the range of [$M$ - $\sigma$,$M$] that is divisible by the denomination value, the banknote dispensing fails and the sub-process ends.

For the banknotes dispensing with only one denomination, here is an example: suppose that only one denomination of 50 is provided in the self-service equipment and only 13 numbers of banknotes are available. If the user-input amount is 552 the precise banknote-dispensing fails due to that 552%50=2 $\neq$ 0, so only the incomplete banknote dispensing method can be adopted. Since there is 550 in the range of [552-5,552] so that 550%50=0 and 550/50=11$\leq$13, the banknote dispensing will success and the self-service equipment may output banknotes. It is also possible to prompt the user to modify the input amount as 550 yuan, so that the existing resource in the self-service equipment can exactly satisfy the requirements.

Second Embodiment

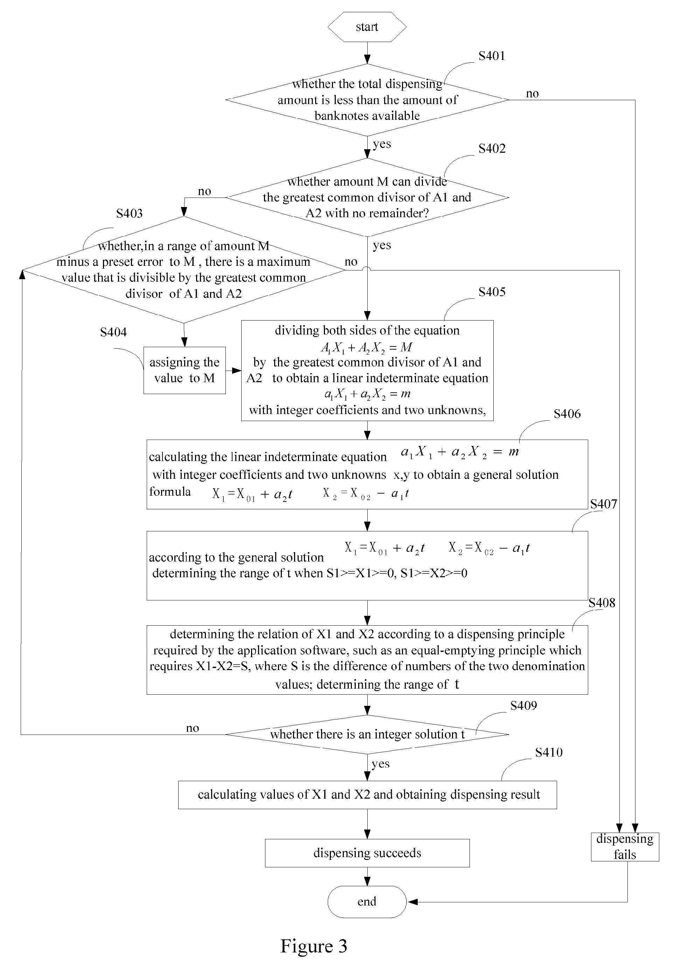

Referring to Figure 3, which shows a whole banknote dispensing process of a self-service equipment in the case where there are two denomination values available in the self-service equipment, the method includes the following steps:

Step S401: determining whether the total dispensing amount is not greater than the amount of banknotes available in banknote boxes of the financial self-service equipment, if yes proceeding to step S402; otherwise the banknote dispensing fails and the sub-process ends.

Step S402: calculating out the greatest common divisor of the two denomination values, and determining whether the greatest common divisor $\gcd(A_1, A_2)$ of the two denomination values can divide the total dispensing amount with no remainder, if yes proceeding to step S405; otherwise proceeding to step S403.

Step S403: calculating, in a range from the total dispensing amount $M$ minus a preset error $\sigma$ to the total dispensing amount $M$ , i.e., in a range of [$M$-$\sigma$,$M$], a maximum value that is divided by the greatest common divisor $\gcd(A_1, A_2)$ of the two denomination values with no remainder, if there is a value in the range of [$M$ - $\sigma$,$M$] that is divisible by the greatest common

divisor gcd($A_1$,$A_2$) of the two denomination values, proceeding to step S404; otherwise, the banknote dispensing fails and the sub-process ends.

Step S404: assigning the value in the range of [$M$-$\sigma$,$M$] that is divisible by the greatest common divisor gcd($A_1$,$A_2$) of the two denomination values to $M$, then proceeding to step S405.

Step S405: determining whether the greatest common divisor gcd($A_1$,$A_2$) of the two denomination values is not greater than 1; if yes, dividing both sides of the equation $A_1X_1 + A_2X_2 = M$ by gcd($A_1$,$A_2$) to obtain a linear indeterminate equation with integer coefficients and two unknowns, $a_1X_1+a_2X_2=m$, where gcd($a_1$, $a_2$)=1, and $M = m \cdot$gcd($A_1$,$A_2$); otherwise keeping $A_1X_1+A_2X_2=M$ the same.

Step S406: calculating the linear indeterminate equation with integer coefficients and two unknowns $a_1X_1 + a_2X_2 = m$ (where gcd($a_1$, $a_2$) =1) to obtain a general solution formula $\begin{cases} X_1 = X_{01} + a_2 t \\ X_2 = X_{02} - a_1 t \end{cases}$, where $t$ is an integer free variable, and $\begin{cases} X_{01} \\ X_{02} \end{cases}$ is one particular solution of $a_1X_1 + a_2X_2 = m$, then proceeding to step S407.

Step S407: according to the general solution of $a_1X_1 + a_2X_2 = m$, where the dispensing number must be equal to or greater than 0 and be equal to or less than the number of available banknotes in the self-service equipment, determining the range of $t$ in the general solution formula $\begin{cases} X_1 = X_{01} + a_2 t \\ X_2 = X_{02} - a_1 t \end{cases}$, then proceeding to step S408.

Step S408: further determining the range of $t$ according to a preset banknote dispensing principle such as an equal-emptying principle and an averaging principle, then proceeding to step S409.

Step S409: determining whether there is an integer solution t, if there is an integer solution t, the banknote dispensing is successful and the sub-process ends; otherwise proceeding to step S403 to calculate another value in the range of [$M$-$\sigma$,$M$] that is divisible by the greatest common divisor gcd($A_1$, $A_2$) of the two denomination values and continue the banknote dispensing.

Step S410: substituting $t$ into the general solution formula to calculate out values of $X_1$ and $X_2$, and outputting $X_1$ numbers of banknotes with the denomination value $A_1$ and $X_2$ numbers of banknotes with the denomination $A_2$ value by the self-service equipment.

For the banknote dispensing in the case where there are two denomination values, here is an example: suppose that there are two denominations: 50 and 20 provided in the self-service equipment and there are 12 pieces of 50 Yuan banknotes and 10 pieces of 20 Yuan banknotes available, that is, $A_1$ = 50, $A_2$ = 20, $S_1$ = 12, $S_2$ =10.

If the total dispensing amount is 553, firstly 553 < (50·12 + 20·10) = 900, then the banknote dispensing may be continued since the greatest common divisor of the two denomination values is 10. Since 553%gcd(50,20)=3 ≠ 0, the precise banknote dispensing method fails, and an incomplete precise banknote dispensing method has to be attempted. Since there is 550 within the range of [553-5,553] so that 550%gcd(50,20)=0, the banknote dispensing is further calculated as $50X_1 + 20X_2 = m$, and both sides of the equation are divided by gcd(50,20) to obtain $5X_1+2X_2=m$, assuming that $M$ / gcd(50, 20) = $m$, thus:

$$\begin{bmatrix} 1 & 0 & 5 \\ 0 & 1 & 2 \end{bmatrix} \rightarrow \begin{bmatrix} 1 & 0 & 5 \\ 0 & 1 & 2 \\ 1 & -2 & 1 \end{bmatrix} \rightarrow \begin{bmatrix} 1 & 0 & 5 \\ 0 & 1 & 2 \\ 1 & -2 & 1 \\ m & -2m & m \end{bmatrix},$$

then $X_1 = m+2t$ and $X_2 = -2m-5t$ may be obtained.

In a case that $M$=550, then $m$=55, that is, $X_1$=55+2$t$ and $X_2$=-110-5$t$. Since 0≤$X_1$≤$S_1$,0≤$X_2$≤$S_2$, then 0≤$X_1$≤12,0≤ $X_2$≤10, thus the range of $t$ is determined as -24≤$t$≤-22.

If an average-dispensing principle is used, then $X_1$≈$X_2$, that is, 55+2$t$=-110-5$t$+$\sigma$⇒7$t$=-165+$\sigma$, where |$\sigma$| is as small as possible; and since -168≤7$t$≤-154, the demanded banknote dispensing solution is $t$=-24,$\sigma$=-3,$X_1$=7,$X_2$=10.

If an equal-emptying principle is used, then $X_1$-$X_2$≈12-10+$\sigma$=2+$\sigma$, where |$\sigma$| is as small as possible, that is, 163+7$t$=$\sigma$; and since -24≤$t$≤-22, the demanded banknote dispensing solution is $t$ = -23, $\sigma$ = 2 , $X_1$ = 9, $X_2$ = 5.

If a minimum-number principle is used, then ($X_1$ + $X_2$) is as small as possible, that is, (-55-3$t$) is as small as possible, and since -24≤$t$≤-22, the demanded banknote dispensing solution is $t$ = -22, $X_1$ = 11, $X_2$ = 0.

If a maximum-denomination priority principle is used, $X_1$ is as great as possible, i.e., (55+2$t$) is as great as possible, and since -24≤$t$≤-22, the demanded banknote dispensing solution is $t$ = -22, $X_1$ =11, $X_2$, = 0.

If the minimum-denomination priority principle is used, $X_2$ is as great as possible, i.e., (-110-5$t$) is as great as possible, and since -24≤$t$≤-22, the demanded banknote dispensing solution is $t = -24$, $X_1 = 7$, $X_2 = 10$.

Third Embodiment

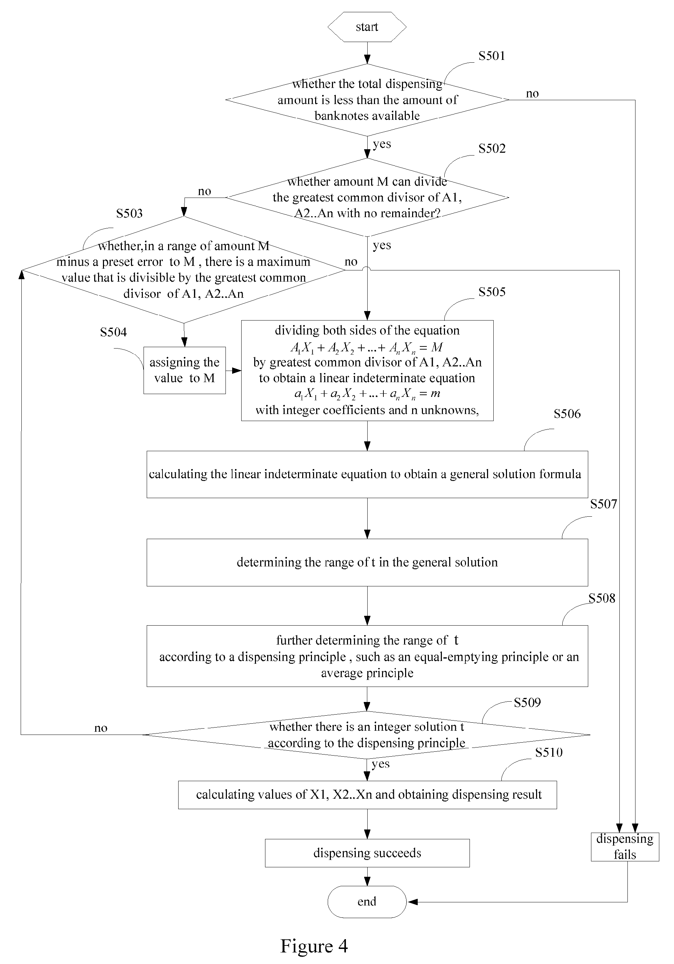

Referring to Figure 4, which shows a whole banknote dispensing process of a self-service equipment in the case where there are n types of denomination values available in the self-service equipment, the process includes the following steps.

Step S501: determining whether the total dispensing amount is not greater than the amount of banknotes available in banknote boxes of the financial self-service equipment, if yes proceeding to step S502; otherwise the banknote dispensing fails and the sub-process ends.

Step S502: calculating out the greatest common divisor of the n types of denomination values, and determining whether the total dispensing amount is divisible by the greatest common divisor $gcd(A_1,A_2...A_n)$ of the n types of denomination values, if yes, proceeding to step S505; otherwise proceeding to step S503.

Step S503: calculating, in a range from the total dispensing amount $M$ minus a preset error $\sigma$ to the total dispensing amount $M$, a maximum value that is divisible by the greatest common divisor $gcd(A_1,A_2...A_n)$ of the n types of denomination values, if there is a value in the range of $[M-\sigma,M]$ that is divisible by the greatest common divisor $gcd(A_1,A_2...A_n)$ of the n types of denomination values, proceeding to S504; otherwise, the banknote dispensing fails and the sub-process ends.

Step S504: assigning the value in the range of $[M-\sigma,M]$ that is divisible by the greatest common divisor $gcd(A_1,A_2...A_n)$ of the n types of denomination values to M, and proceeding to step S505.

Step S505: determining whether the greatest common divisor $gcd(A_1,A_2...A_n)$ of the n types of denomination values is not greater than 1, if yes, dividing both sides of the equation $\sum_{i=1}^{n} A_i X_i = M$ by $gcd(A_1,A_2...A_n)$ to obtain a linear indeterminate equation with integer coefficients and n unknowns, $\sum_{i=1}^{n} a_i X_i = m$, where $gcd(a_1,a_2...,a_n)=1$, and $M=m \cdot gcd(A_1,A_2...A_n)$; otherwise keeping $\sum_{i=1}^{n} A_i X_i = M$ the same.

Step S506: calculating a general solution formula of the linear indeterminate equation with integer coefficients and n unknowns $\sum_{i=1}^{n} a_i X_i = m$ (where $gcd(a_1,a_2...,a_n)=1$) as

$$\begin{cases} X_1 = X_{01}[M-(a_3 X_3 + \cdots + a_n X_n)]+a_2 t \\ X_2 = X_{02}[M-(a_3 X_3 + \cdots + a_n X_n)]-a_1 t \end{cases},$$ where

$t,x_3,x_4,\cdots,x_n \in Z$, and proceeding to step S507.

Step S507: according to the general solution of $\sum_{i=1}^{n} a_i X_i = m$, where the dispensing number must be equal to or greater than 0 and be equal to or smaller than the number of the banknotes in the self-service equipment, that is, $0 \le X_1 \le S_1$, $0 \le X_2 \le S_2$...$0 \le X_n \le S_n$ ($S_1, S_2... S_n$ are the numbers of available banknotes corresponding to the denomination values), determining the range of t in the general solution formula

$$\begin{cases} X_1 = X_{01}[M-(a_3 X_3 + \cdots + a_n X_n)]+a_2 t \\ X_2 = X_{02}[M-(a_3 X_3 + \cdots + a_n X_n)]-a_1 t \end{cases},$$ and proceeding to step S508.

Step S508: further determining the range of $t$ according to a preset banknote dispensing principle such as an equal-emptying principle and an averaging principle, and proceeding to step S509.

Step S509: determining whether there is an integer solution t, if there is an integer solution t, the banknote dispensing is successful and the sub-process ends; otherwise proceeding to step S503 to calculate another value in the range of $[M-\sigma,M]$ that is divisible by the greatest common divisor $gcd(A_1,A_2...A_n)$ of the n types of denomination values and continue the banknote dispensing.

Step S510: substituting $t$ into the general solution formula to calculate $X_1,X_2\cdots X_n$, and outputting $X_1,X_2\cdots X_n$ numbers of banknotes with the corresponding denomination $A_1,A_2...A_n$ by the self-service equipment.

In summary, the banknote dispensing method provided by the invention has practical significance in real life. In the case where the banknote dispensing for the total dispensing amount fails, an automatic teller machine(ATM) will not simply prompt failure, but determine whether to give a reference banknote dispensing solution to the user according to the practical situation. By the reference banknote dispensing solution, the output amount of banknotes is most approaching to the total dispensing amount and the error will not fall outside a system preset range based on comprehensive consideration about the existing cash resource.

It should be noted that embodiments shown in Figure 1 to Figure 4 are only preferable embodiments described in the invention, and more embodiments may be designed by those skilled in the art on the basis of the above embodiments, which will not be described herein.

It is apparent for those skilled in the art to make numerous modifications to these embodiments, and the general principle herein can be implemented in other embodiments without deviating from the spirit or scope of the invention. Therefore, the invention will not be limited to the embodiments described herein, but in accordance with the widest scope consistent with the principle and novel features disclosed herein.

## Claims

1. A method a financial self-service equipment to dispense banknotes, comprising:

   acquiring a total dispensing amount input by a user;
   acquiring denomination values of available banknotes in the self-service equipment;
   acquiring the number of available banknotes corresponding to each denomination value;
   determining a total available amount in the self-service equipment according to the denomination values and the number of available banknotes;
   dispensing banknotes for the total dispensing amount adopting a precise banknote dispensing method, in the case where the total available amount is not less than the total dispensing amount and the greatest common divisor of only one denomination value or some denomination values available in the self-service equipment can divide the total dispensing amount with no remainder;
   determining a new dispensing amount which falls into a range from the total dispensing amount minus a preset error to the total dispensing amount, wherein the new dispensing amount can divide the greatest common divisor of only one denomination value or some denomination values available in the self-service equipment with no remainder, in the case where the total available amount is not less than the total dispensing amount and the greatest common divisor of only one denomination value or some denomination values available in the self-service equipment can not divide the total dispensing amount with no remainder;
   if there is a new dispensing amount, setting the new dispensing amount as the total dispensing amount, and dispensing banknotes for the total dispensing amount adopting the precise banknote dispensing method; and
   if there is no new dispensing amount in the range from the total dispensing amount minus the preset error to the total dispensing amount, prompting that the banknote dispensing fails.

2. The method for a financial self-service equipment to dispense banknotes according to claim 1, wherein, in the case where there is only one denomination value available in the self-service equipment, the precise banknote dispensing method comprises:

   calculating a quotient from dividing the total dispensing amount by the only one denomination value; and
   outputting banknotes with the only one denomination value by the self-service equipment, the number of the outputting banknotes being equal to the quotient.

3. The method for a financial self-service equipment to dispense banknotes according to claim 1, wherein, in the case where there are two denomination values available in the self-service equipment, the precise banknote dispensing method comprises:

   establishing a relation between the two denomination values, the number of available banknotes corresponding to each of the two denomination values and the total dispensing amount, which is expressed as the following equation: $A_1X_1 + A_2X_2 = M$, where $A_1$ and $A_2$ are the two denomination values respectively, $X_1$ is the number of dispensing banknotes with the denomination value $A_1$, $X_2$ is the number of dispensing banknotes with the denomination value $A_2$, and $M$ is the total dispensing amount;
   dividing both sides of the equation $A_1X_1 + A_2X_2 = M$ by the greatest common divisor $\gcd(A_1,A_2)$ to obtain a linear equation with two unknowns, $a_1X_1 + a_2X_2 = m$, in the case where the greatest common divisor $\gcd(A_1,A_2)$ of the two denomination values is not greater than 1, where $a_1$ is a quotient from dividing $A_1$ by $\gcd(A_1, A_2)$, $a_2$ is a quotient from dividing $A_2$ by $\gcd(A_1,A_2)$, and $m$ is the quotient from dividing $M$ by $\gcd(A_1,A_2)$;
   calculating a general solution of $a_1X_1 + a_2X_2 = m$ to obtain a general solution formula

$$\begin{cases} X_1 = X_{01} + a_2t \\ X_2 = X_{02} - a_1t \end{cases}, \text{ where } \begin{cases} X_{01} \\ X_{02} \end{cases} \text{ is one particular}$$

   solution of $a_1X_1 + a_2X_2 = m$, and $t$ is an integer free variable;
   calculating out a set of $A$ all $t$ satisfying $0 \leq X_1 \leq S_1$, $0 \leq X_2 \leq S_2$ according to the general solution formula, where $S_1$ is the actual number of available banknotes with the denomination value $A_1$, and $S_2$ is the actual number of available banknotes with the denomination $A_2$;
   further determining, in the set $A$, the range of $t$ according to a preset banknote dispensing principle corresponding to $X_1$ and $X_2$; and
   substituting the integer $t$ into the general solution formula to calculate out values of $X_1$ and $X_2$, and outputting $X_1$ number of banknotes with the denomination value $A_1$ and $X_2$ number of banknotes with the denomination value $A_2$ by the self-service equipment, in the case where there is an integer $t$.

4. The method for a financial self-service equipment to dispense banknotes according to claim 1, wherein, in the case where there are n types of denomination values available in the self-service equipment, the precise banknote dispensing method comprises:

establishing a relation between the n types of denomination values, the number of available banknotes corresponding to each of the n types of denomination values and the total dispensing, which is expressed as the following equation:

$\sum_{i=1}^{n} A_i X_i = M$ , where $A_i$ is one denomination value of the n types of denomination values, $X_i$ is the number of dispensing banknotes with the denomination value $A_i$, n is the total number of the denomination value types, and M is the total dispensing amount;

dividing both sides of the equation $\sum_{i=1}^{n} A_i X_i = M$ by the greatest common divisor $gcd(A_1, A_2...A_n)$ to obtain a linear indeterminate equation with integer coefficients and n unknowns, $\sum_{i=1}^{n} a_i X_i = m$ , in the case where the greatest common divisor $gcd(A_1, A_2...A_n)$ of the n types of denomination values is not greater than 1, where $a_i$ is a quotient from dividing $A_i$ by $gcd(A_1, A_2...A_n)$, and m is a quotient from dividing M by $gcd(A_1, A_2...A_n)$;

calculating a general solution formula of the linear indeterminate equation with integer coefficients and n unknowns $\sum_{i=1}^{n} a_i X_i = m$ (where $gcd(a_1, a_2..., a_n) = 1$), which is

$\begin{cases} X_1 = X_{01}[M - (a_3 X_3 + \cdots + a_n X_n)] + a_2 t \\ X_2 = X_{02}[M - (a_3 X_3 + \cdots + a_n X_n)] - a_1 t \end{cases}$ ,

where $t, x_3, x_4, \cdots, x_n \in Z$;

calculating out a set A of all t satisfying $0 \le X_1 \le S_1$, $0 \le X_2 \le S_2 ... 0 \le X_n \le S_n$ according to the general solution of $\sum_{i=1}^{n} a_i X_i = m$ , where $S_1, S_2 \cdots S_n$ are the numbers of available banknotes respectively with the denominations values $A_1, A_2...A_n$;

determining, in the set A, the range of t according to a preset banknote dispensing principle corresponding to $X_1, X_2 \cdots X_n$; and

substituting the integer t into the general solution formula to calculate out values of $X_1, X_2 \cdots X_n$, and outputting $X_1, X_2 \cdots X_n$ numbers of banknotes with corresponding denomination values $A_1, A_2...A_n$, in the case where there is an integer t .

5. The method for a financial self-service equipment to dispense banknotes according to claim 3 or 4, wherein, the preset banknote dispensing principle is an average-dispensing principle.

6. The method for a financial self-service equipment to dispense banknotes according to claim 3 or 4, wherein, the preset banknote dispensing principle is an equal-emptying principle.

7. The method for a financial self-service equipment to dispense banknotes according to claim 3 or 4, wherein, the preset banknote dispensing principle is a number minimum principle.

8. The method for a financial self-service equipment to dispense banknotes according to claim 3 or 4, wherein, the preset banknote dispensing principle is a maximum-denomination priority principle.

9. The method for a financial self-service equipment to dispense banknotes according to claim 3 or 4, wherein, the preset banknote dispensing principle is a minimum-denomination priority principle.

10. The method for a financial self-service equipment to dispense banknotes according to claim 1, wherein, in the case where there is no new dispensing amount, after the step of prompting that the banknote dispensing fails, the method further comprises:

acquiring, in a database, by the self-service equipment, available denomination values and the number of banknotes corresponding to each available denomination value of other self-service equipments connected to a network;

determining, in the database, a specific address of a self-service equipment that conforms to a preset condition, the preset condition being that: the total available amount in the self-service equipment is not less than the total dispensing amount and the greatest common divisor of only one denomination value or some denomination values available in the self-service equipment can divide the total dispensing amount with no remainder; or that there is a new dispensing amount which falls into a range from the total dispensing amount minus a preset error to the total dispensing amount and can divide the greatest common divisor of only one denomination value or some denomination values available in the self-service equipment with no remainder; and

displaying the specific address.

acquiring a total dispensing amount input by a user — S11

acquiring denomination values of available banknotes in the self-service equipment — S12

acquiring the number of available banknotes corresponding to each denomination value — S13

determining a total available amount in the self-service equipment according to the denomination values and the number of available banknotes — S14

dispensing banknotes for the total dispensing amount adopting a precise banknote dispensing method when a first condition is satisfied — S15

determining a new dispensing amount when a second condition is satisfied — S16

if there is a new dispensing amount, setting the new dispensing amount as the total dispensing amount, and dispensing banknotes for the total dispensing amount adopting the precise banknote dispensing method — S17

if there is no new dispensing amount in the range from the total dispensing amount minus the preset error to the total dispensing amount, prompting that the banknote dispensing fails — S18

Figure 1

Figure 2

start

S401

whether the total dispensing amount is less than the amount of banknotes available — no

yes

S402

whether amount M can divide the greatest common divisor of A1 and A2 with no remainder?

no

S403

whether,in a range of amount M minus a preset error to M , there is a maximum value that is divisible by the greatest common divisor of A1 and A2

yes

no

S404

assigning the value to M

S405

dividing both sides of the equation
$A_1 X_1 + A_2 X_2 = M$
by the greatest common divisor of A1 and A2 to obtain a linear indeterminate equation
$a_1 X_1 + a_2 X_2 = m$
with integer coefficients and two unknowns,

S406

calculating the linear indeterminate equation $a_1 X_1 + a_2 X_2 = m$ with integer coefficients and two unknowns x,y to obtain a general solution formula $X_1 = X_{01} + a_2 t$ $X_2 = X_{02} - a_1 t$

S407

according to the general solution $X_1 = X_{01} + a_2 t$ $X_2 = X_{02} - a_1 t$ determining the range of t when S1>=X1>=0, S1>=X2>=0

S408

determining the relation of X1 and X2 according to a dispensing principle required by the application software, such as an equal-emptying principle which requires X1-X2=S, where S is the difference of numbers of the two denomination values; determining the range of t

S409

no — whether there is an integer solution t

yes

S410

calculating values of X1 and X2 and obtaining dispensing result

dispensing succeeds

dispensing fails

end

Figure 3

start

S501

whether the total dispensing
amount is less than the amount of
banknotes available

no

yes

S502

whether amount M can divide
the greatest common divisor of A1,
A2..An with no remainder?

no

S503

yes

whether,in a range of amount M
minus a preset error to M , there is a maximum
value that is divisible by the greatest common
divisor of A1, A2..An

no

S505

S504

dividing both sides of the equation
$A_1X_1 + A_2X_2 + ... + A_nX_n = M$
by greatest common divisor of A1, A2..An
to obtain a linear indeterminate equation
$a_1X_1 + a_2X_2 + ... + a_nX_n = m$
with integer coefficients and n unknowns,

assigning the
value to M

S506

calculating the linear indeterminate equation to obtain a general solution formula

S507

determining the range of t in the general solution

S508

further determining the range of t
according to a dispensing principle , such as an equal-emptying principle or an
average principle

S509

no

whether there is an integer solution t
according to the dispensing principle

S510

yes

calculating values of X1, X2..Xn and obtaining dispensing result

dispensing succeeds

dispensing
fails

end

Figure 4

# INTERNATIONAL SEARCH REPORT

| | International application No. |
| --- | --- |
| | PCT/CN2013/073649 |

## A. CLASSIFICATION OF SUBJECT MATTER

See the extra sheet

According to International Patent Classification (IPC) or to both national classification and IPC

## B. FIELDS SEARCHED

Minimum documentation searched (classification system followed by classification symbols)

IPC: G09F 19/00, G07D, G07F, G06F

Documentation searched other than minimum documentation to the extent that such documents are included in the fields searched

Electronic data base consulted during the international search (name of data base and, where practicable, search terms used)

CNABS,CNTXT,VEN: distribut+ note?, allot+, money output+, dispens+, money, currency, bill?, take out, exchang+, denomination?, amount, greatest common divisor, divide exactly, error, preset+, more than, less than, precision, exactness, nicety

## C. DOCUMENTS CONSIDERED TO BE RELEVANT

| Category* | Citation of document, with indication, where appropriate, of the relevant passages | Relevant to claim No. |
| --- | --- | --- |
| P,X | CN 102903177 A (GRG BANKING EQUIPMENT CO LTD) 30 January 2013 (30.01.2013) claims 1 to 10 | 1-10 |
| A | CN 101763684 A (GRG BANKING EQUIPMENT CO LTD) 30 June 2010 (30.06.2010) the whole document | 1-10 |
| A | CN 101377870 A (HUANG, Jinfu) 04 March 2009 (04.03.2009) the whole document | 1-10 |
| A | CN 202058233 U (IND&COMMERCIAL BANK CHINA LTD) 30 November 2011 (30.11.2011) the whole document | 1-10 |
| A | US 2004011621 A1 (OLBRICH J H) 22 January 2004 (22.01.2004) the whole document | 1-10 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 30 June 2013 (30.06.2013) | 18 July 2013 (18.07.2013) |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer YANG, Xue Telephone No. (86-10) 62085838 |
| --- | --- |

Form PCT/ISA /210 (second sheet) (July 2009)

INTERNATIONAL SEARCH REPORT
Information on patent family members

| Patent Documents referred in the Report | Publication Date | Patent Family | Publication Date |
|---|---|---|---|
| CN 102903177 A | 30.01.2013 | None | |
| CN 101763684 A | 30.06.2010 | CN 101763684 B | 08.08.2012 |
| | | WO 2011076049 A1 | 30.06.2011 |
| | | AU 2010335833 A1 | 05.07.2012 |
| | | US 2012265337 A1 | 18.10.2012 |
| | | EP 2518699 A1 | 31.10.2012 |
| | | VN 31335 A | 25.10.2012 |
| CN 101377870 A | 04.03.2009 | None | |
| CN 202058233 U | 30.11.2011 | None | |
| US 2004011621 A1 | 22.01.2004 | US 6763924 B2 | 20.07.2004 |

International application No.

PCT/CN2013/073649

Form PCT/ISA/210 (patent family annex) (July 2009)

## INTERNATIONAL SEARCH REPORT

| International application No. |
| --- |
| PCT/CN2013/073649 |

CLASSIFICATION OF SUBJECT MATTER

G09F 19/00 (2006.01) i

G07D 13/00 (2006.01) i

Form PCT/ISA /210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201210380387